# EUROPEAN PATENT SPECIFICATION

(11) **EP 0 484 075 B1**
(45) Date of publication and mention of the grant of the patent: **14.12.1994**
(21) Application number: 91309924.8
(22) Date of filing: 28.10.1991
(51) Int. Cl.: B60C 9/22, B60C 9/14, B60C 15/00

(54) **Motorcycle radial tyre**
Radialer Reifen für Motorräder
Pneumatique radial pour moto

(30) Priority: 29.10.1990 JP 292528/90; 26.09.1991 JP 276943/91
(43) Date of publication of application: 06.05.1992
(73) Proprietor: SUMITOMO RUBBER INDUSTRIES LIMITED, Kobe-shi Hyogo-ken (JP)
(72) Inventor: Suzuki, Shigehiko, Amagasaki-shi, Hyogo-ken (JP); Yasui, Itsuo, Nishinomiya-shi, Hyogo-ken (JP)
(74) Representative: Stewart, Charles Geoffrey

(56) References cited:
- EP-A- 0 092 498
- DE-A- 3 242 323
- DE-A- 3 314 563
- DE-A- 3 535 064
- DE-A- 3 535 188

## Description

The present invention relates to a pneumatic tyre, more particularly a belted radial tyre for motorcycle use, in which high speed steering stability and durability are improved.

In order to provide motorcycles with high-speed running stability during cornering and also straight running, a belted radial tyre provided with a carcass composed of one radial ply and a single jointless belt has been proposed, wherein the jointless belt is disposed between the carcass and a rubber tread and formed by spirally winding a cord around the carcass continuously from one edge to the other edge of the belt ply.

In such a belted radial tyre, since the windings of the belt cord run almost parallel to the tyre equator, the hooping force of the belt in the tyre tread region is enhanced to improve durability in high-speed running. However, the lateral rigidity of the tread region and shoulder portions is not effectively increased by this, and the tyre has a problem of slow convergence or recovery from disturbances during cornering and straight running.

Also problems of nibbling (wandering) and steering stability arise.

A tyre having features according to the preamble of claim 1 is known, for example, from DE-A-3535064.

It is an object of the present invention to provide a motorcycle radial tyre in which directional stability during high speed straight running and high speed cornering performance are improved, and at the same time the disturbance converging characteristic is improved to provide improved manoeuvrability, and further resistance to nibbling.

According to one aspect of the present invention, a motorcycle radial tyre comprises a tread (2) curved so that the maximum cross sectional width of the tyre lies between the edges (E1,E2) of the tread 2, a pair of bead cores (5) disposed one in each bead (4), a carcass (6) having at least one ply of radially arranged organic fibre cords extending between the beads (4) and turned up around the bead cores (5) to form two turned up portions (6b) and one main portion (6a) of the carcass, , a first belt (7) disposed radially outside the carcass (6) and comprising one cord (11) or a plurality of parallel cords wound spirally so that the windings thereof are laid at small angles of 0 to 5 degrees with respect to the tyre equator (C), the cords (11) of the first belt having an elastic modulus of not less than 5884 N/mm² (600 kgf/mm²), characterised by the radial height (Ht) of the radially outer edge of the carcass turned up portions from the bead base line (15) being more than 0.6 times and less than 1.2 times the radial height (Hs) of tread edges (E1,E2) from the bead base line 15, a second belt (8) disposed radially outside the first belt and comprising one ply of parallel organic fibre cords laid at at angle of 10 to 30 degrees with respect to the tyre equator, a bead apex (9) disposed between the main portion (6a) and each turned up portion (6b) of the carcass and extending radially outwardly from the bead core (5), the bead apex (9) being made of rubber having a Shore A hardness of 67 to 77 (JIS(A) hardness of 65 to 75), the radial height (Ha) of the radially outer edge of the bead apex (9) from the bead base line (15) being more than 0.5 and less than 1.2 times the radial height (Hs) of the tread edges (E1,E2).

Embodiments of the present invention will now be described in detail in conjunction with the accompanying drawings, in which:
Figure 1 is a cross sectional view of a tyre according to the present invention;
Figure 2 is a cross sectional view of another tyre according to the present invention;
Figure 3 is an enlarged perspective view of a cord reinforced ribbon of rubber for making the jointless belt thereof;
Figure 4 is a cross sectional view showing an example of winding the ribbon;
Figure 5 is a cross sectional view showing another example of winding the ribbon;

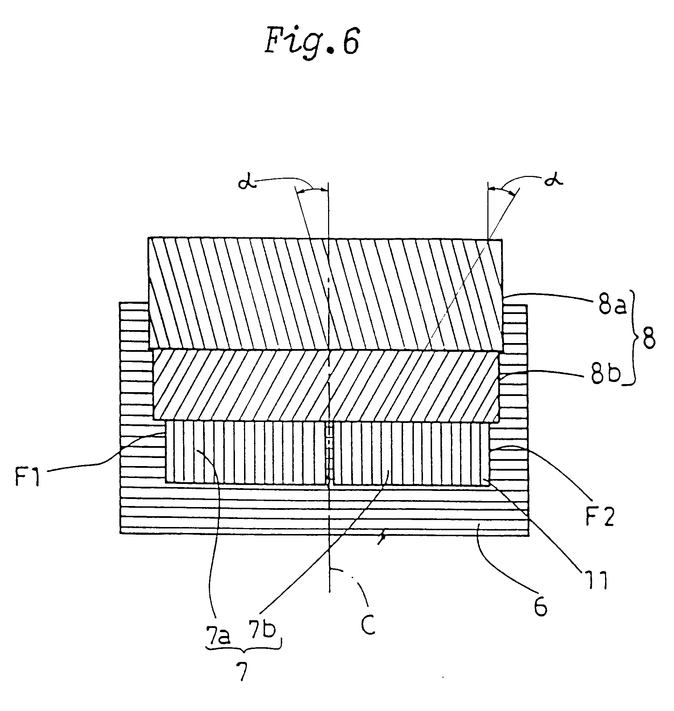

Figure 6 is a developed plan view showing the arrangement of the carcass, jointless belt and breaker belt in the tyre of Figure 1; and
Figure 7 is a developed plan view showing the arrangement of the carcass, jointless belt and breaker belt in the tyre of Figure 2.

In the figures, a motorcycle radial tyre 1 has a tread 2, a pair of axially spaced beads 4, and a pair of sidewalls 3 extending radially inwardly from the edges E1 and E2 of the tread to the beads. A pair of bead cores 5 are provided one disposed in each bead 4, a carcass 6 extends between the beads 4 and is turned up around the bead cores 5 from the axially inside to outside thereof to form two turned up portions 6b and one main portion 6a of the carcass 6, and belts 7 and 8 are disposed radially outside the carcass 6 and inside the tread 2.

The carcass 6 has at least one ply of cords arranged radially of the tyre at an angle of 60 to 90 degrees with respect to the tyre equator C.

For the carcass cords, organic fibre cords, e.g. nylon, rayon, polyester, aromatic polyamide or the like may be used.

The radial height Ht of the radially outer edge of the above-mentioned carcass turned up portions 6b is more than 0.6 and less than 1.2 times the radial height Hs of the tread edges E1 and E2, both measured from the bead base line 15.

If the height Ht is less than 0.6 times the tread edge height Hs, the lateral stiffness of the sidewalls is too small and the sidewalls are subjected to excessive bending stress which lowers the durability, and further improves the steering response.

If the height Ht is more than 1.2 times Hs, the rigidity of the sidewalls is too great to give adequate ride comfort. Further, such a higher turnup is not preferable due to excessive weight of the tyre.

Between each carcass turned up portion 6b and the carcass main portion 6a, a bead apex 9 made of hard rubber is disposed.

The bead apex 9 extends taperingly, radially outwardly from the bead core 5.

The radial height Ha of the radially outer edge L of the bead apex from the bead base line 15 is more than 0.5 times and less than 1.2 times the above-mentioned height Hs of the tread edge.

If the height Ha is less than 0.5 times the height Hs, the bending rigidity of the beads is decreased, and the bead durability is lost.

A rubber tread is disposed radially outside the crown portion of the carcass to define the tread 2. The tread 2 is curved so that the maximum tyre cross section width lies between the tread edges E1 and E2.

A pair of rubber sidewalls 13 are disposed axially outside the carcass 6 to provide the sidewall portions 3.

Each sidewall 13 has a double-layered structure which comprises an axially inner sidewall 13a made of hard rubber and an axially outer sidewall 13b made of softer rubber, and the sidewall 13 extends between the bead 4 and the tread edge E1, E2.

The belts in the example shown in Figure s 1 and 6 are a jointless belt 7 disposed on the radially outside of the carcass 6 and a breaker belt 8 comprising a radially outer ply 8a and a radially inner ply 8b both disposed radially outside the jointless belt 7.

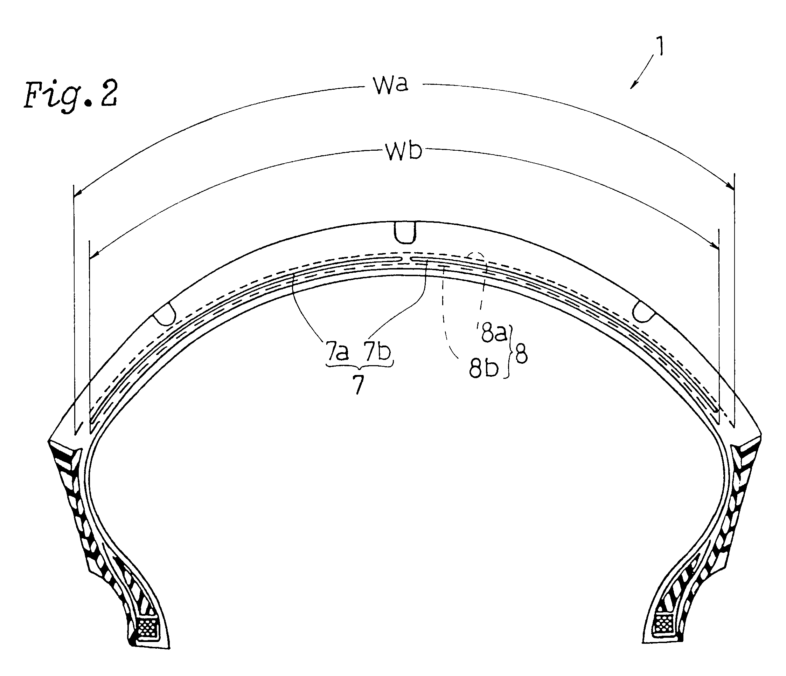

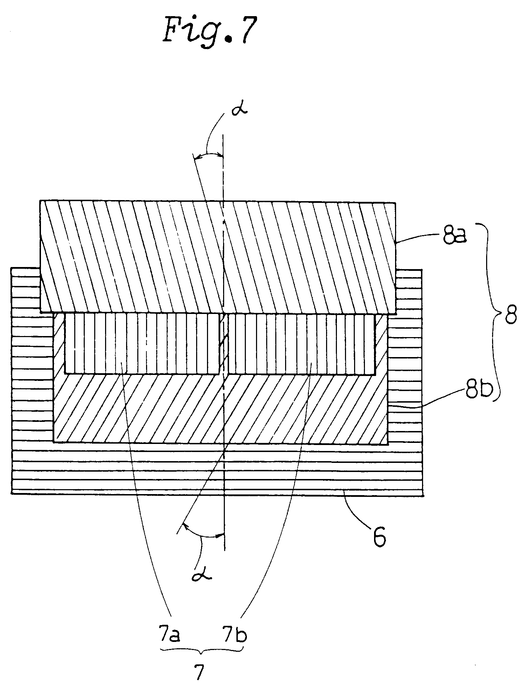

The belts in the example shown in Figures 2 and 7 are a jointless belt 7 and a breaker belt 8 comprising a radially inner ply 8b disposed on the radially outside of the carcass 6 and a radially outer ply 8a disposed radially outside the ply 8b, wherein the jointless belt 7 is disposed between the radially outside and inside plies 8a and 8b.

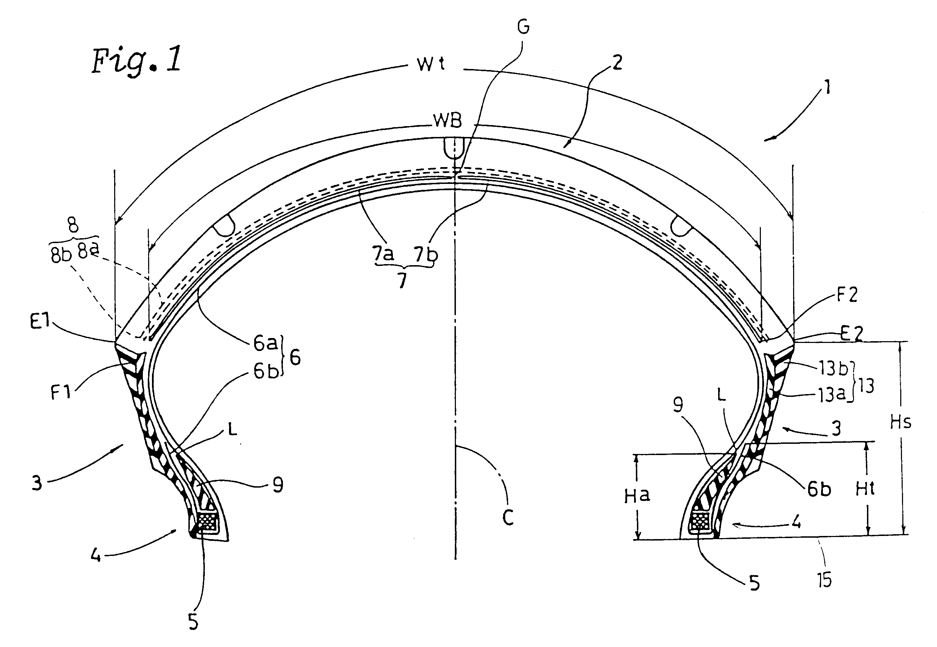

The jointless belt 7 is formed by spirally winding at least one ribbon 10 of rubber. In Figure 1, the ribbons are wound on the carcass. In Figure 2, the ribbons are wound on the previously applied breaker belt 8b.

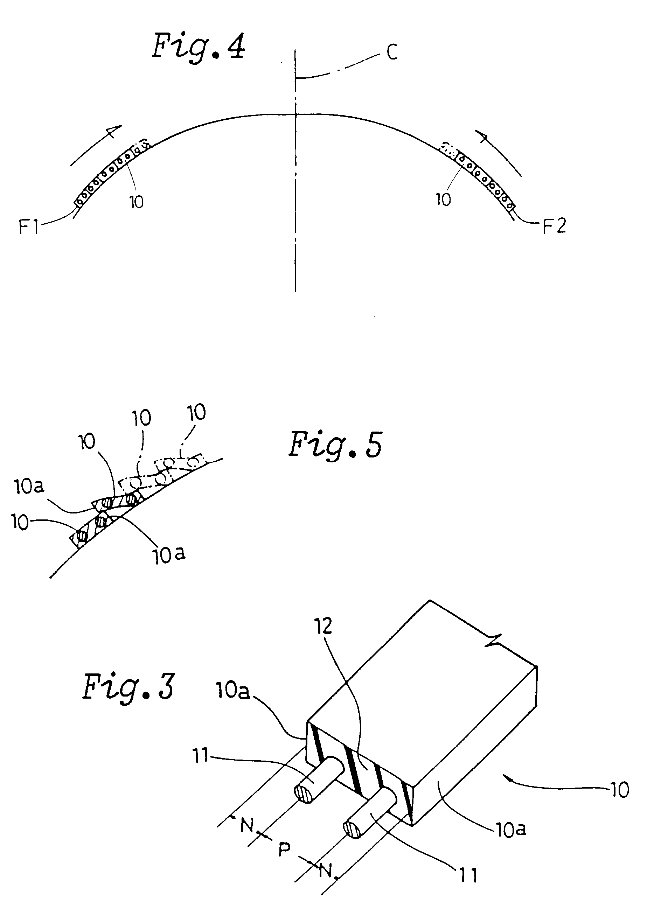

Figure 3 shows the ribbon 10, in which one belt cord or a plurality of parallel belt cords, in this example two parallel cords 11, are embedded in rubber 12 along its longitudinal direction.

For the belt cords 11, organic fibre cords, e.g. Teflon, aromatic polyamide, polyester or the like, or steel cords, having a high modulus of elasticity of not less than 5884 N/mm² (600 kgf/mm²) may be used.

Preferably, aromatic polyamide fibre cords are used for their high modulus.

If the elastic modulus is less than 5884 N/mm² (600 kgf/mm²), the tread portion is not effectively reinforced, and high speed running performance and high speed durability are insufficient.

In this example, the ribbon 10 has a flat rectangular cross sectional shape, and the distance N measured from each of the side edges 10a to the centre of the adjacent cord 11 is set to be not more than 1/2 of the belt cord pitch P.

In each of the embodiments shown in Figures 1 and 2, the jointless belt 7 comprises two axially divided pieces 7a and 7b disposed one on each side of the tyre equator C.

In order to form those two pieces, two ribbons 10 are used. As shown in Figure 4, each ribbon is wound spirally and continuously from a start point F1, F2 near the tread edge E1, E2 to an end point G on or near the tyre equator C so that the belt cords 11 are laid at small angles of 0 to 5 degrees with respect to the tyre equator C.

In the embodiment shown in Figure 1, the ribbons are wound around the crown portion of the carcass 6. In the embodiment shown in Figure 2, the ribbons are wound around the radially inner breaker ply 8b.

In Figure 4, the windings of each ribbon are not overlapped. It is however, possible to overlap the side edges 10a of the windings over each other as shown in Figure 5 to prevent the windings from being loosened especially at the starting point of the winding, so that ply separation failure at the jointless belt edges is reduced. To smoothly overlap the edges 10a, the edges 10a of the ribbon are preferably tapered.

In the above-mentioned belt 7, the windings of the ribbon 10 or the windings of the belt cords 11 in one belt piece 7a are laid at the same inclination angle as the other belt piece 7b, but in the opposite direction with respect to the tyre equator C.

By winding two ribbons 10 simultaneously to form the belt pieces 7a and 7b, the time to male the belt 7 is greatly reduced in comparison with a onepiece jointless belt.

As the belt pieces 7a and 7b are formed by winding ribbons starting from the axially outer edges F1 and F2 toward the tyre equator, the loosening of the windings of the ribbon 10 especially at the edges can be prevented.

In this embodiment, the width WB of the jointless belt 7 measured along the belt 7 between the edges thereof is more than 0.7 and less than 1.0 times the width Wt of the tread 2 measured along the tread face between the tread edges E1 and E2.

When the width WB is less than 0.7 times Wt, the stiffness of the tread shoulder region is too low which lowers the steering stability in quick turning.

If the width WB is greater than 1.0 times Wt, the rigidity of the sidewalls is excessively increased which deteriorates ride comfort.

More preferably the width WB is more than 0.85 times and less than 0.90 times the width Wt.

In the above-mentioned breaker belt 8, each ply 8a, 8b is formed by winding a full width strip of unwoven fabric. The breaker cords in each ply are arranged at an angle (alpha) of 10 to 30 degrees with respect to the tyre equator C and are parallel to each other but crosswise to the breaker cords in the other ply.

For the breaker cords, organic fibre cords, e.g. nylon and the like having a lower elastic modulus in comparison with the above-mentioned belt cords 11 are used.

The widths Wa and Wb of the radially inner and outer breaker plies 8a and 8b, respectively, are 2 to 5 mm greater than the width WB of the jointless belt 7.

Test tyres of size 170/60VR17 having the tyre structure shown in Figure 1 and the specifications given in Table 1 were prepared and tested for the following tyre performance factors.
1) High speed straight running stability and High speed cornering stability
   A motorcycle fitted on the rear wheel with the test tyre was run on a straight course at 260 km/Hr and around a 400 m radius curve course at 220 km/Hr, and the running stability was evaluated by a skilled test driver.
   The stability is indicated by an index based on the assumption that Reference tyre 1 is 100. The larger the value, the better the stability.
2) Convergence (Steering stability)
   Convergence following disturbance during cornering and straight running was evaluated by the skilled test driver.
3) High speed durability
   Using a drum tyre tester, the running speed was increased every 10 minutes by a step of 10 km/Hr from an initial speed of 250 km/Hr, and the running distance until the tread or beads were cracked was measured. The tyre pressure was 294 kN/m² (3.0 kgf/cm²), and the tyre load was 355 kg.
   The durability is indicated by an index based on the assumption that Reference tyre 1 is 100. The larger the value, the better the durability.
4) Resistance to nibbling (Resistance to wandering)
   While running on a test course provided with rain grooves and projections at a speed of 200 km/Hr, the resistance to nibbling was evaluated by the test driver.

Incidentally, in the above-mentioned tests, a 120/70R17 tyre was used for the front wheel. The specifications thereof are given in Table 2.

Through the tests, it was confirmed that working Example tyres were superior in all respects (steering stability, high-speed running stability and resistance to nibbling, and further high-speed durability) to Reference tyres.

In the above-mentioned two embodiments, the spiral winding directions in the belt pieces 7a and 7b are differed from each other, but they may be the same directions.

Further, the jointless belt may be formed by winding one ribbon 10 spirally and continuously from one edge to the other edge thereof.

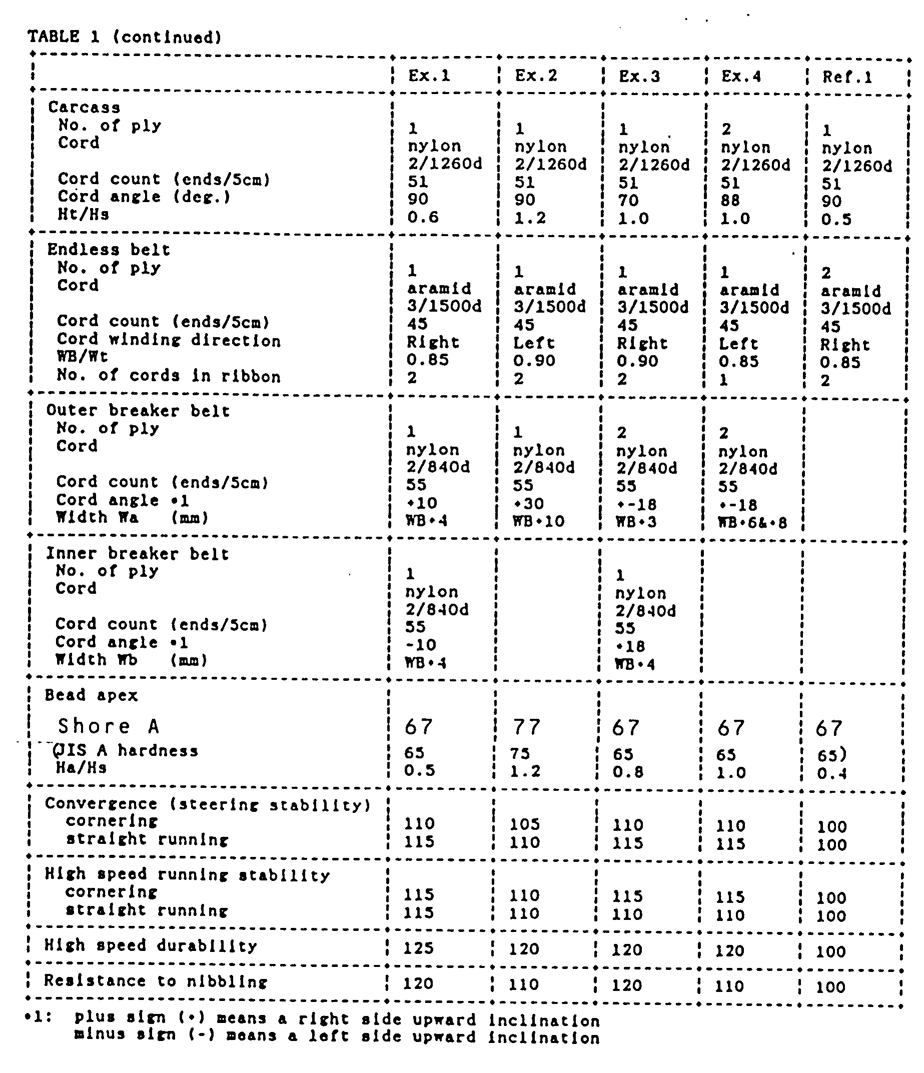

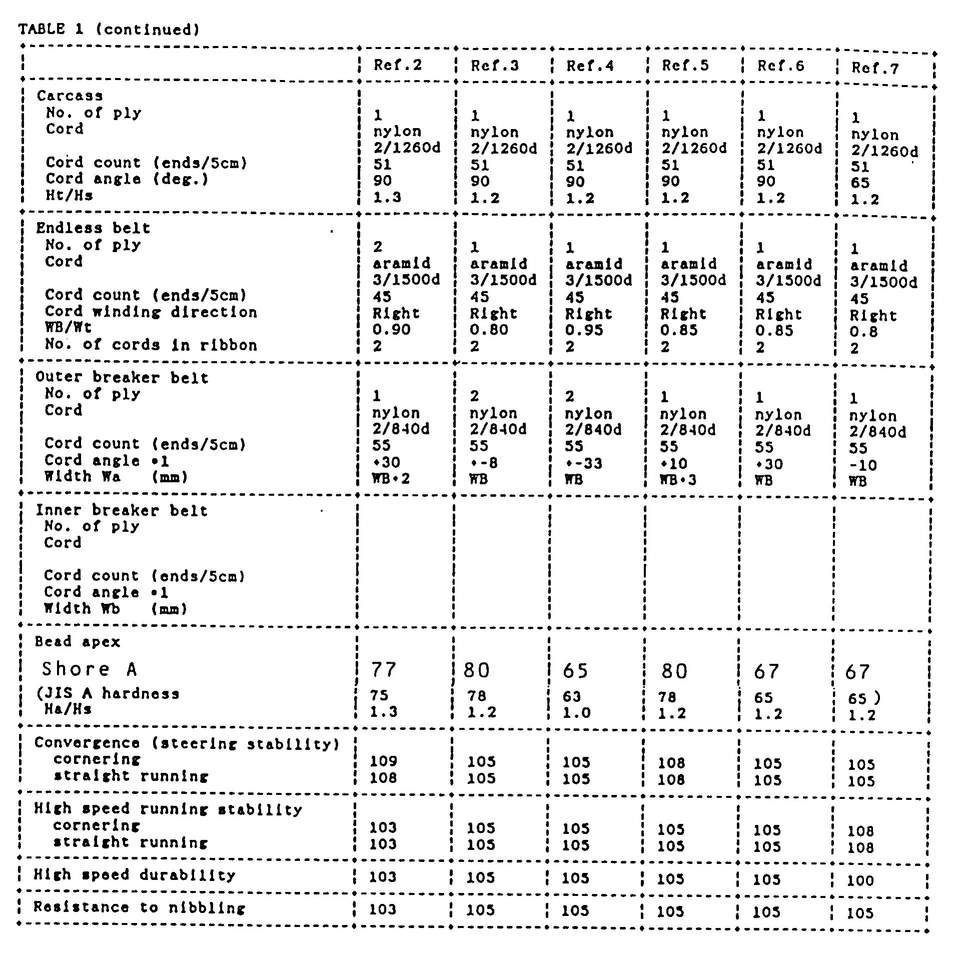

**TABLE 2**

| Carcass | |
|---|---|
| No. of ply | 2 |
| Cord | nylon 2/840d |
| Cord count (ends/5cm) | 55 |
| Cord angle (deg.) | 88 |
| Ht/Hs | 0.7 |

| Belt | |
|---|---|
| No. of ply | 2 |
| Cord | aramid 3/1500d |
| Cord count (ends/5cm) | 45 |
| Cord angle (deg.) | 17 |

| Bead apex | |
|---|---|
| Ha/Hs | 0.6 |

## Claims

1. A motorcycle radial tyre comprising a tread (2) curved so that the maximum cross sectional width of the tyre lies between the edges (E1,E2) of the tread 2, a pair of bead cores (5) disposed one in each bead (4), a carcass (6) having at least one ply of radially arranged organic fibre cords extending between the beads (4) and turned up around the bead cores (5) to form two turned up portions (6b) and one main portion (6a) of the carcass, , a first belt (7) disposed radially outside the carcass (6) and comprising one cord (11) or a plurality of parallel cords wound spirally so that the windings thereof are laid at small angles of 0 to 5 degrees with respect to the tyre equator (C), the cords (11) of the first belt having an elastic modulus of not less than 5884 N/mm² (600 kgf/mm²), characterised by the radial height (Ht) of the radially outer edge of the carcass turned up portions from the bead base line (15) being more than 0.6 times and less than 1.2 times the radial height (Hs) of tread edges (E1,E2) from the bead base line 15, a second belt (8) disposed radially outside the first belt and comprising one ply of parallel organic fibre cords laid at at angle of 10 to 30 degrees with respect to the tyre equator, a bead apex (9) disposed between the main portion (6a) and each turned up portion (6b) of the carcass and extending radially outwardly from the bead core (5), the bead apex (9) being made of rubber having a Shore A hardness of 67 to 77 (JIS(A) hardness of 65 to 75), the radial height (Ha) of the radially outer edge of the bead apex (9) from the bead base line (15) being more than 0.5 and less than 1.2 times the radial height (Hs) of the tread edges (E1,E2).

2. A motorcycle radial tyre according to claim 1, characterised in that said tyre is provide with a third belt (8b) disposed between the carcass (6) and the first belt (8a), and the third belt (8b) comprises one ply of parallel organic fibre cords laid at an angle of 10 to 30 degrees with respect to the tyre equator so that the cords thereof cross the cords of the second belt.

3. A motorcycle radial tyre according to claim 1, characterised in that said tyre is provide with a third belt disposed radially outside the second belt, and the third belt comprises one ply of parallel organic fibre cords laid at an angle of 10 to 30 degrees with respect to the tyre equator so that the cords thereof cross the cords of the second belt.

## Patentansprüche

1. Ein Motorradradialreifen mit einer Lauffläche (2), die so gekrümmt ist, daß die maximale Querschnittsbreite des Reifens zwischen den Kanten (E1, E2) der Lauffläche 2 liegt, einem Paar von Wulstkernen (5), die einer in jedem Wulst (4) angeordnet sind, einer Karkasse (6) mit wenigstens einer Lage radial angeordneter organischer Faserkorde, die sich zwischen den Wülsten (4) erstreckt und um die Wulstkerne (5) herum umgeschlagen ist, um zwei umgeschlagene Abschnitte (6b) und einen Hauptabschnitt (6a) der Karkasse zu bilden, und einem ersten Gürtel (7), der radial außerhalb der Karkasse (6) angeordnet ist und einen Kord (11) oder eine Vielzahl paralleler Korde umfaßt, die spiralförmig so gewickelt sind, daß die Wicklungen davon unter kleinen Winkeln von 0 bis 5 Grad bezüglich des Reifenäquators (C) gelegt sind, wobei die Korde (11) des ersten Gürtels einen Elastizitätsmodul von nicht weniger als 5884 N/mm² (600 kgf/mm²) besitzen,
**dadurch gekennzeichnet**,
daß die radiale Höhe (Ht) der radial äußeren Kante der umgeschlagenen Abschnitte der Karkasse von der Wulstbasislinie (15) aus mehr als das 0,6-fache und weniger als das 1,2-fache der radialen Höhe (Hs) der Laufflächenkanten (E1, E2) von der Wulstbasislinie (15) aus beträgt, ein zweiter Gürtel (8) radial außerhalb des ersten Gürtels angeordnet ist und eine Lage paralleler organischer Faserkorde umfaßt, die unter einem Winkel von 10 bis 30 Grad bezüglich des Reifenäquators gelegt sind, und ein Wulstkernreiter (9) zwischen dem Hauptabschnitt (6a) und jedem umgeschlagenen Abschnitt (6b) der Karkasse angeordnet ist und sich radial nach außen vom Wulstkern (5) erstreckt, wobei der Wulstkernreiter (9) aus Gummi mit einer Shore A-Härte von 67 bis 77 (JIS(A)-Härte von 65 bis 75) besteht und die radiale Höhe (Ha) der radial äußeren Kante des Wulstkernreiters (9) von der Wulstbasislinie (15) aus mehr als das 0,5- und weniger als das 1,2-fache der radialen Höhe (Hs) der Laufflächenkanten (E1, E2) beträgt.

2. Ein Motorradradialreifen nach Anspruch 1,
dadurch gekennzeichnet,
daß der Reifen mit einem dritten Gürtel (8b) versehen ist, der zwischen der Karkasse (6) und dem ersten Gürtel (8a) angeordnet ist, und der dritte Gürtel (8b) eine Lage paralleler organischer Faserkorde umfaßt, die unter einem Winkel von 10 bis 30 Grad bezüglich des Reifenäquators so gelegt sind, daß die Korde davon die Korde des zweiten Gürtels kreuzen.

3. Ein Motorradradialreifen nach Anspruch 1,
dadurch gekennzeichnet,
daß der Reifen mit einem dritten Gürtel versehen ist, der radial außerhalb des zweiten Gürtels angeordnet ist, und der dritte Gürtel eine Lage paralleler organischer Faserkorde umfaßt, die unter einem Winkel von 10 bis 30 Grad bezüglich des Reifenäquators so gelegt sind, daß die Korde davon die Korde des zweiten Gürtels kreuzen.

## Revendications

1. Pneumatique à carcasse radiale pour motocyclette, comprenant une bande de roulement (2) ayant une courbure telle que la largeur maximale en coupe du pneumatique est comprise entre les bords (E1, E2) de la bande de roulement 2, une paire de tringles (5) disposées chacune dans un talon (4), une carcasse (6) ayant au moins une nappe de câblés de fibres organiques disposée radialement entre les talons (4) et repliée autour des tringles (5) pour la formation de deux parties repliées (6b) et d'une partie principale (6a) de la carcasse, une première ceinture (7) disposée radialement à l'extérieur de la carcasse (6) et comprenant un câblé (11) ou plusieurs câblés parallèles enroulés en spirale afin que les enroulements forment de petits angles de 0 à 5° par rapport à l'équateur (C) du pneumatique, les câblés (11) de la première ceinture ayant un module élastique qui n'est pas inférieur à 5 884 N/mm² (600 kgf/mm²), caractérisé en ce que la hauteur radiale (Ht) du bord radialement externe des parties repliées de carcasse par rapport à l'axe de référence (15) des talons est supérieure à 0,6 fois et inférieure à 1,2 fois la hauteur radiale (Hs) des bords (E1, E2) de la bande de roulement par rapport à l'axe de référence 15 des talons, une seconde ceinture (8) disposée radialement à l'extérieur de la première ceinture et comprenant une nappe de câblés parallèles de fibres organiques formant un angle de 10 à 30° avec l'équateur du pneumatique, une pointe de bourrage de talon (9) disposée entre la partie principale (6a) et chaque partie repliée (6b) de la carcasse et disposée radialement vers l'extérieur depuis la tringle (5), la pointe de bourrage de talon (9) étant formée d'un caoutchouc ayant une dureté Shore A de 67 à 77 (dureté JIS (A) de 65 à 75), la hauteur radiale (Ha) du bord radialement externe de la pointe de bourrage de talon (9) par rapport à l'axe de référence de talon (15) étant supérieure a 0,5 fois et inférieure à 1,2 fois la hauteur radiale (Hs) des bords (E1, E2) de la bande de roulement.

2. Pneumatique à carcasse radiale pour motocyclette selon la revendication 1, caractérisé en ce que le pneumatique a une troisième ceinture (8b) placée entre la carcasse (6) et la première ceinture (8a), et la troisième ceinture (8b) comprend une nappe de câblés parallèles de fibres organiques formant un angle de 10 à 30° avec l'équateur du pneumatique de manière que ses câblés recoupent les câblés de la seconde ceinture.

3. Pneumatique à carcasse radiale pour motocyclette selon la revendication 1, caractérisé en ce que le pneumatique a une troisième ceinture placée radialement à l'extérieur de la seconde ceinture, et la troisième ceinture comprend une nappe de câblés parallèles de fibres organiques formant un angle de 10 à 30° avec l'équateur du pneumatique de manière que ses câblés recoupent les câblés de la seconde ceinture.
